# EUROPÄISCHE PATENTANMELDUNG

(11) **EP 2 268 069 A2**
(43) Veröffentlichungstag der Anmeldung: **29.12.2010**
(21) Anmeldenummer: 10005826.2
(22) Anmeldetag: 05.06.2010
(51) Int. Cl.: H04W 8/24

(54) **Endgerät für ein Telekommunikationsnetz, Verfahren zum Betreiben eines solchen Endgeràts und Verfahren zum Erstellen eines Ersatzendgeràts**

(30) Priorität: 23.06.2009 CH 9752009
(71) Anmelder: Swissphone Telecom AG, 8832 Wollerau (CH)
(72) Erfinder: Köchler, Helmut, CH-8832 Wollerau (CH)
(74) Vertreter: Fischer, Britta Ruth

(57) **Zusammenfassung**

Die Erfindung betrifft ein Endgerät für ein Telekommunikationsnetz mit einer GSM-SIM-Karte, wobei dem Telekommunikationsnetz eine zentrale Leitstelle zugeordnet ist, wobei das Endgerät derart ausgestaltet ist, dass es über die zentrale Leitstelle mittels Fernzugriff konfigurierbar ist.

## Beschreibung

Die Erfindung betrifft ein Endgerät für ein Telekommunikationsnetz, Verfahren zum Betreiben eines solchen Endgeräts und ein Verfahren zum Erstellen eines Ersatzendgeräts. Bei dem Endgerät handelt es sich um einen Pager oder um ein pagerartiges Gerät. Die Erfindung ist besonders für den Einsatz in Alarmierungsnetzwerken z.B. einer Feuerwehr und in Arbeitssicherheitsanwendungen geeignet, aber nicht auf diese Anwendungsbereiche beschränkt.

Unter einem Endgerät wird ein Gerät verstanden, welches an einem Netzanschluss eines Telekommunikationsnetzes angeschlossen ist, wobei der Anschluss üblicherweise über eine Funkverbindung erfolgt (http://de.wikipedia.org.wiki/Endgerät). Als Endgeräte in einem Telekommunikationsnetz werden typischerweise digitale Alarmempfänger wie Pager eingesetzt. Zur digitalen Alarmierung kann als Telekommunikations- bzw. Wellennetz beispielsweise BOS-Funk (Behörden und Organisationen mit Sicherheitsaufgaben-Funk) nach POCSAG (Post Office Code Standard Advisory Group) eingesetzt werden. Einsatzkräfte und Einsatzteams z.B. der Feuerwehr, der Polizei und/oder von Rettungsdiensten bekommen ihre Aufträge als Alarmmeldungen von einer zentralen Leitstelle, die als Alarmgeber fungiert, auf ihre Endgeräte geschickt.

Heutzutage verfügen die Endgeräte üblicherweise über eine SIM-Karte (Subscriber Identity Module-Karte) für den GSM-Standard (GSM - Global System for Mobile Communications) und bieten somit die Möglichkeit zur GSM-Kommunikation z.B. nach dem GPRS-Standard (GPRS - General Packet Radio Service) und/oder mittels SMS-Meldungen (SMS - Short Message Service). Eine SIM-Karte für den GSM-Standard wird im Folgenden auch GSM-SIM-Karte genannt. Erhält ein Endgerätebenutzer eine Alarmmeldung, so kann er diese also mittels GSM-Kommunikation beantworten, beispielsweise indem er eine kurze SMS-Nachricht des Inhalts "ich komme" bzw. "ich komme nicht" (gemeint ist: "ich komme bzw. komme nicht zum Ort des Alarm auslösenden Ereignisses") an die zentrale Leitstelle zurücksendet.

Für eine Konfiguration, eine Fehlerdiagnose und/oder eine Fehlerbehebung muss bis jetzt das Endgerät physisch zu einer Servicestelle oder einer entsprechenden Stelle gebracht werden, da es sowohl für die Konfiguration des Endgeräts als auch für die Fehlerdiagnose und Fehlerbehebung beim Endgerät notwendig ist, eine physische Kommunikationsverbindung, z.B. über eine serielle Schnittstelle, mit einem entsprechenden Gerät, insbesondere einem Computer (z.B. einem Personal Computer) zu schaffen, das dann die Konfiguration bzw. die Fehlerdiagnose und/oder Fehlerbehebung am Endgerät durchführt.

Für die Erstellung eines Ersatzendgeräts für ein defektes und daher zu ersetzendes Endgerät müssen zum jetzigen Zeitpunkt ein Computer mit einem Konfigurationsprogramm, ein (Programmier-)Adapter für den Anschluss des defekten Endgeräts an den Computer und die exakte Konfigurationsdatei des defekten, zu ersetzenden Endgeräts vorhanden sein. Die Erstellung eines Ersatzendgeräts umfasst dessen Programmierung. Für die Erstellung der Ersatzendgeräts wird das Ersatzendgerät über den Adapter physisch an den Computer angeschlossen. Dann wird das Konfigurationsprogramm auf dem Computer gestartet. Das Konfigurationsprogramm lädt nun die exakte Konfigurationsdatei des zu ersetzenden, defekten Endgeräts, die beispielsweise auf dem Computer oder einem externen Speichermedium gespeichert ist, und schreibt die Daten der Konfigurationsdatei in das Endgerät, womit das Ersatzendgerät einsatzbereit ist. Die Daten der Konfigurationsdatei werden auch als Konfigurationsdaten oder kurz als Konfiguration bezeichnet.

Es ist Aufgabe der Erfindung, ein Endgerät für ein Telekommunikationsnetz zu schaffen, welches einfach, sicher und mit geringem gerätemässigen Aufwand konfiguriert werden·kann. Es ist ferner Aufgabe der Erfindung, ein einfaches und sicheres Verfahren zum Betreiben eines Endgeräts bereitzustellen, welches insbesondere für die Konfiguration des Endgeräts und/oder die Fehlerdiagnose und/oder Fehlerbehebung bei dem Endgerät wenig zusätzliche Geräte benötigt. Es ist weiter Aufgabe der Erfindung ein einfaches und sicheres Verfahren zum Erstellen eines Ersatzendgeräts zu schaffen, welches wenig zusätzliche Geräte benötigt.

Diese Aufgabe wird durch ein Endgerät mit den Merkmalen des Anspruchs 1, Verfahren zum Betreiben eines Endgeräts mit den Merkmalen des Anspruchs 2 bzw. des Anspruchs 4 bzw. des Anspruchs 7 und eine Verfahren zum Erstellen eines Ersatzendgeräts mit den Merkmalen des Anspruchs 11 gelöst.

Das erfindungsgemässe Endgerät für ein Telekommunikationsnetz weist eine GSM-SIM-Karte auf und kennzeichnet sich dadurch aus, dass es derart ausgestaltet ist, dass es über eine zentrale Leitstelle, die dem Telekommunikationsnetz zugeordnet ist und insbesondere einen Teil des Telekommunikationsnetzes bildet, mittels Fernzugriff konfigurierbar ist. Der Begriff "Fernzugriff" meint den drahtlosen Zugriff über eine weite Distanz beispielsweise mittels GSM-Kommunikation oder WiFi-Kommunikation (WiFi - Wireless Fidelity), wenn das Endgerät und die zentrale Leitstelle für die WiFi-Kommunikation ausgebildet sind. Selbstverständlich können auch andere geeignete Kommunikationstechnologien eingesetzt werden.

Gemäss einem ersten Aspekt des erfindungsgemässen Verfahrens zum Betreiben eines erfindungsgemässen Endgeräts wird das Endgerät dadurch konfiguriert, dass die gewünschte Konfiguration des Endgeräts von der dem Telekommunikationsnetz zugeordneten Leitstelle mittels Fernzugriff teilweise oder vollständig in das Endgerät geschrieben wird. Unter dem Begriff "Konfiguration" werden insbesondere die Konfigurationsdaten bzw. die Daten einer Konfigurationsdatei verstanden. Die Konfiguration eines Endgeräts kann somit mittels dieses erfindungsgemässen Verfahrens geändert bzw. angepasst werden, zum Beispiel an veränderte Einsatzbedingungen. Vorzugsweise werden vor dem Schreiben der gewünschten Konfiguration in das Endgerät die momentane Konfiguration, insbesondere sämtliche momentanen Konfigurationsdaten, des Endgeräts von der zentralen Leitstelle mittels Fernzugriff aus dem Endgerät ausgelesen.

Nach erfolgreicher Konfiguration des Endgeräts bzw. erfolgreichem Schreiben der gewünschten Konfiguration mittels Fernzugriff in das Endgerät, ist es vorzugsweise vorgesehen, dass das Endgerät und/oder die zentrale Leitstelle eine Mitteilung ausgeben, beispielsweise auf einem Display, die besagt, dass die (Um-)Konfiguration des Endgeräts erfolgreich stattgefunden hat. Entsprechendes gilt vorzugsweise, falls die Konfiguration des Endgeräts nicht erfolgreich gewesen ist.

Gemäss einem zweiten Aspekt der Erfindung können gemäss einem erfindungsgemässen Verfahren zum Betreiben des Endgeräts für die Fehlerdiagnose und/oder Fehlerbehebung relevante Daten, die in dem Endgerät vorhanden sind, von der zentralen Leitstelle mittels Fernzugriff aus dem Endgerät ausgelesen werden. Bei den für eine Fehlerdiagnose und/oder Fehlerbehebung relevanten Daten handelt es sich insbesondere um Konfigurationsdaten, (vorzugsweise sämtliche) Produktionsdaten wie z.B. die Seriennummer, Informationen über einen gegebenenfalls stattgefundenen Absturz (Crash) eines Mikrocontrollers des Endgeräts und/oder vom Endgerät während des Betriebs empfangene Meldungen, insbesondere Alarmmeldungen. Die Fehlerdiagnose und/oder Fehlerbehebung kann dann anhand dieser Daten von der zentralen Leitstelle mittels Fernzugriff durchgeführt oder von dieser veranlasst werden.

Für die Fehlerbehebung beim Endgerät können von der zentralen Leitstelle vorzugsweise ausserdem mittels Fernzugriff im Endgerät die Zeit zurückgesetzt, das Endgerät selbst zurückgesetzt, eine oder mehrere Alarm-Melodien abgespielt und/oder ein Funktionstest am Endgerät durchgeführt werden, beispielsweise ein Funktionstest einer Tastatur, eines Display, eines GSM-Moduls, eines GPS-Moduls und/oder eines POCSAG-Empfängers des Endgeräts.

Gemäss einem dritten Aspekt des erfinderischen Verfahrens zum Betreiben eines Endgeräts liest die zentrale Leitstelle für die Überwachung bzw. das Monitoring des jeweiligen Telekommunikationsnetzwerks, bei dem es sich beispielsweise um ein POCSAG-Netzwerk handeln kann, mittels Fernzugriff von dem Endgerät gemessene Netwerkpegel, vorzugsweise periodisch, aus dem Endgerät aus. Das periodische Auslesen kann im Endgerät lokal getriggert sein, beispielsweise mittels eines internen Timers, oder fern getriggert sein, z. B. mittels POCSAG. Die Netzwerkpegel werden auch als RSSI (Received Signal Strength Indication) bezeichnet. In Abhängigkeit von den ausgelesenen Netzwerkpegeln können dann, vorzugsweise von der zentralen Leitstelle, Signalpegelkarten erstellt werden.

Auf diese Weise können mit Hilfe des Fernzugriffs durch die zentrale Leitstelle einfach und sicher Endgeräte im Einsatz und im Feld und das Telekommunikationsnetz online überwacht und somit eine hohe Verkehrsgüte (Quality of Service) gewährleistet werden.

Das erfindungsgemässe Verfahren zum Erstellen eines Ersatzendgeräts kennzeichnet sich dadurch aus, dass eine GSM-SIM-Karte eines zu ersetzenden Endgeräts in das Ersatzendgerät als dessen GSM-SIM-Karte eingebracht und das Ersatzendgerät eingeschaltet wird. Danach wird eine (eindeutige) Identifikationsnummer der eingebrachten GSM-SIM-Karte von dem Ersatzendgerät gelesen und via GSM an eine zentrale Leitstelle des Telekommunikationsnetzes gesendet, was eine Aufforderung (einen sogenannten Request) zur Programmierung bzw. Umprogrammierung an die zentrale Leitstelle darstellt. Bei der eindeutigen Identifikationsnummer kann es sich zum Beispiel um die sogenannte International Mobile Subscriber Identity (IMSI) handeln (http://de.wikipedia.org/wiki/International Mobile_Subscr iber_Identity). Nachdem die zentrale Leitstelle die Identifikationsnummer der GSM-SIM-Karte empfangen hat, sendet die zentrale Leitstelle basierend auf der Aufforderung zur (Um)Programmierung die vollständige/komplette Konfiguration des zu ersetzenden Endgeräts, die ihr bekannt ist (z.B. indem sie auf ihr bzw. einem externen Speichermedium, auf das die zentrale Leitstelle zugreifen kann, gespeichert ist), an das Ersatzendgerät und schreibt dabei mit Hilfe des oben als erster Aspekt genannten erfindungsgemässen Verfahrens die vollständige/komplette Konfiguration auf das Endgerät. Gemäss dem als erster Aspekt genannten Verfahren zum Betreiben eines Endgeräts, wird das Ersatzendgerät dadurch konfiguriert, dass die gewünschte Konfiguration (hier: die vollständige Konfiguration des zu ersetzenden Endgeräts) von der zentralen Leitstelle mittels Fernzugriff vollständig in das Ersatzendgerät geschrieben wird. Das Ersatzendgerät ist danach wie das zu ersetzende Endgerät programmiert und kann eingesetzt werden.

Auf diese Weise kann ein Ersatzendgerät einfach und sicher durch das Einsetzen bzw. Einbringen der GSM-SIM-Karte des zu ersetzenden Endgeräts und mittels Fernzugriff mit der Konfiguration des zu ersetzenden Endgeräts programmiert werden. Es werden lokal vorteilhafterweise keine weiteren Elemente bzw. Geräte benötigt, an die das Ersatzendgerät physisch angeschlossen werden müsste, d.h. es werden weder eine Computer mit einem Konfigurationsprogramm, ein (Programmier-)Adapter, noch eine exakte Konfigurationsdatei des zu ersetzenden Endgeräts bzw. eine exakte Kopie dieser Konfigurationsdatei (sondern nur die Konfigurationsdaten) benötigt.

Sollen die Benutzer der Endgeräte alarmiert werden, beispielsweise beim Auftreten eines Brandes, so wird typischerweise eine Alarmmeldung von der zentralen Leitstelle an die Endgeräte gesandt. Die Alarmmeldung wird in und von der zentralen Leitstelle je nach Einsatz- bzw. Alarmfall, bzw. je nach dem den Alarm auslösenden Ereignis, dynamisch bzw. Einzelfall abhängig definiert und an die Endgeräte versandt. Hierzu kann beispielsweise eine Alarmierungsmethode wie die bekannte Standard-POCSAG-Alarmierung eingesetzt werden. Bevorzugt werden jedoch dynamische Alarmierungsmethoden wie sogenannter Express-Alarm oder sogenanntes Turbo-Paging eingesetzt, die eine schnellere Alarmierung erlauben.

Die mit Endgeräten ausgestatteten Einsatzkräfte sind üblicherweise in Teams eingeteilt. Die gesamte von der zentralen Leitstelle ausgesandte Alarmierungsmeldung zur Alarmierung eines oder mehrerer Teams besteht entsprechend aus einem Alarmierungstext und den zu alarmierenden Adressen, wobei jede Adresse einem Team zugeordnet ist.

Der Alarmierungstext ist in der zentralen Leitstelle flexibel gestaltbar und hängt vom jeweiligen Einsatzfall ab. Die zu alarmierenden Adressen werden durch die zentrale Leitstelle ebenfalls je nach Einsatzfall dynamisch, d.h. vom jeweiligen Einsatzfall abhängig, zusammengestellt. Die Zuordnung der zu alarmierenden Adressen zu den jeweiligen (Einsatz-)Teams ist fix bzw. fest in den betroffenen Endgeräten programmiert.

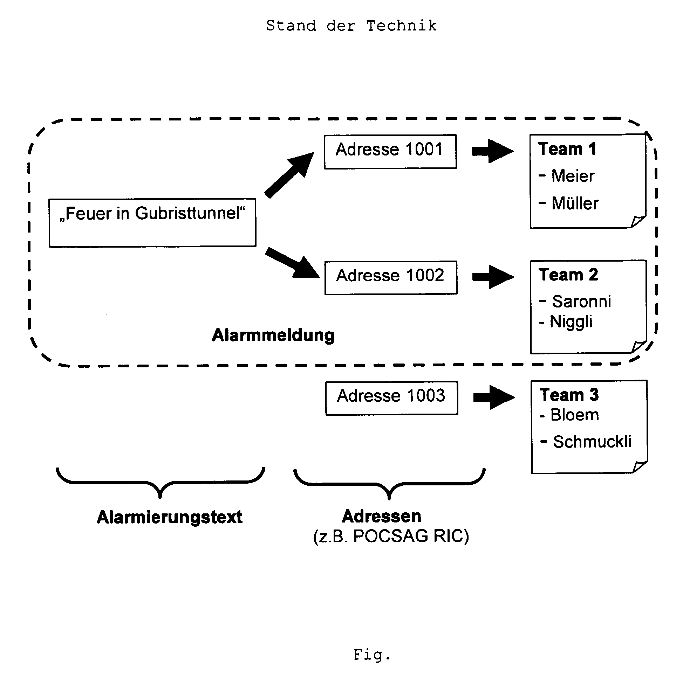

Die einzige Figur zeigt eine entsprechende Alarmmeldung, die den Alarmierungstext "Feuer im Gubristtunnel" und die zu alarmierenden Adressen 1001 und 1002 umfasst. Der Adresse 1001 ist das Team 1 mit den Teammitgliedern Meier und Müller zugeordnet und der Adresse 1002 ist das Team 2 mit den Teammitgliedern Saronni und Niggli zugeordnet. Die Adresse 1003, der das Team 3 mit den Teammitgliedern Bloem und Schmuckli zugeordnet ist, soll in diesem beispielhaften Fall nicht durch die Alarmmeldung alarmiert werden und ist somit nicht in der Alarmmeldung enthalten. Nur die Teams 1 und 2 erhalten also die Alarmmeldung mit dem Hinweis, dass im Gubristtunnel ein Feuer ausgebrochen ist.

Nach dem bisherigen Stand der Technik musste die Programmierung der Adressen, die Zuordnung von Adressen zu Teams und die Zuordnung von (Team-)Mitgliedern zu den Teams vor dem Einsatz der Endgeräte erfolgen und konnte danach nicht mehr verändert werden. Dies hat den Nachteil, dass nach dieser Programmierung keine flexible, d.h. vom Einsatzfall abhängige, Zusammenstellung der Teams aufgrund beispielsweise von Teammitglieder-Absenzen (wegen Ferien, Krankheit oder ähnlichem) mehr durch die zentrale Leitstelle erfolgen kann.

Mit dem erfindungsgemässen Verfahren kann vorteilhafterweise das in dem Endgerät hinterlegte Einsatzteam während des Betriebs des Endgeräts von der zentralen Leitstelle mittels Fernzugriff, beispielsweise täglich, geändert und/oder neu bzw. anders zusammengesetzt werden. Das heisst, in den Endgeräten kann die Zuordnung von Teammitgliedern zu den Teams und somit zu den Adressen via Fernzugriff durch die zentrale Leitstelle und somit via Fernkonfiguration im Sinne des oben genannten ersten Aspekts des erfindungsgemässen Verfahrens dynamisch, also vom Einsatzfall abhängig, umprogrammiert werden. Einsatzteams können auf diese Weise dynamisch mittels Fernzugriff erstellt und im Endgerät durch die zentrale Leitstelle programmiert werden. Die Alarmmeldungen werden dabei vorzugsweise wie bisher via Express Alarm oder Turbo Paging versandt.

## Patentansprüche

1. Endgerät für ein Telekommunikationsnetz mit einer GSM-SIM-Karte, wobei dem Telekommunikationsnetz eine zentrale Leitstelle zugeordnet ist, **dadurch gekennzeichnet, dass** das Endgerät derart ausgestaltet ist, dass es über die zentrale Leitstelle mittels Fernzugriff konfigurierbar ist.

2. Verfahren zum Betreiben eines Endgeräts nach Anspruch 1, **dadurch gekennzeichnet, dass** das Endgerät **dadurch** konfiguriert wird, dass die gewünschte Konfiguration des Endgeräts von der zentralen Leitstelle des Telekommunikationsnetzes mittels Fernzugriff teilweise oder vollständig in das Endgerät geschrieben wird.

3. Verfahren nach Anspruch 2, **dadurch gekennzeichnet, dass** vor dem Schreiben der gewünschten Konfiguration in das Endgerät die momentane Konfiguration des Endgeräts von der zentralen Leitstelle mittels Fernzugriff aus dem Endgerät ausgelesen wird.

4. Verfahren zum Betreiben eines Endgeräts nach Anspruch 1, insbesondere Verfahren nach Anspruch 2 oder 3, **dadurch gekennzeichnet, dass** für eine Fehlerdiagnose und/oder Fehlerbehebung für die Fehlerdiagnose und/oder Fehlerbehebung relevante Daten, die in dem Endgerät vorhanden sind, von der zentralen Leitstelle mittels Fernzugriff aus dem Endgerät ausgelesen werden.

5. Verfahren nach Anspruch 4, **dadurch gekennzeichnet, dass** für die Fehlerdiagnose und/oder Fehlerbehebung relevante Daten Konfigurationsdaten, Produktionsdaten, insbesondere eine Seriennummer, Informationen über einen Mikrocontroller-Absturz und/oder vom Endgerät während des Betriebs empfangene Meldungen sind.

6. Verfahren nach Anspruch 4 oder 5, **dadurch gekennzeichnet, dass** für die Fehlerdiagnose und/oder Fehlerbehebung von der zentralen Leitstelle mittels Fernzugriff in dem Endgerät die Zeit gesetzt wird, das Endgerät zurückgesetzt wird, eine oder mehrere Alarm-Melodien abgespielt werden und/oder ein Funktionstest am Endgerät durchgeführt wird.

7. Verfahren zum Betreiben eines Endgeräts nach Anspruch 1, insbesondere Verfahren nach einem der Ansprüche 2 bis 6, **dadurch gekennzeichnet, dass** die zentrale Leitstelle zur Überwachung des Telekommunikationsnetzes von dem Endgerät gemessene Netzwerkpegel mittels Fernzugriff aus dem Endgerät ausliest.

8. Verfahren nach Anspruch 7, **dadurch gekennzeichnet, dass** die gemessenen Netzwerkpegel periodisch, insbesondere lokal oder fern getriggert, ausgelesen werden.

9. Verfahren nach Anspruch 7 oder 8, **dadurch gekennzeichnet, dass** in Abhängigkeit von den ausgelesenen Netzwerkpegeln eine oder mehrere Signalpegelkarten erstellt werden.

10. Verfahren nach einem der Ansprüche 2 bis 9, **dadurch gekennzeichnet, dass** zum Zwecke der Alarmierung in dem Endgerät ein Einsatzteam hinterlegt ist, wobei die Mitglieder des Einsatzteams von der zentralen Leitstelle mittels Fernzugriff, insbesondere täglich, geändert und/oder zusammengestellt werden können.

11. Verfahren zum Erstellen eines Ersatzendgeräts, **dadurch gekennzeichnet, dass**
- eine GSM-SIM-Karte eines zu ersetzenden Endgeräts in das Ersatzendgerät als dessen GSM-SIM-Karte eingebracht und das Ersatzendgerät eingeschaltet wird,
- eine Identifikationsnummer der eingebrachten GSM-SIM-Karte von dem Ersatzendgerät gelesen und via GSM an die zentrale Leitstelle gesendet wird,
- die zentrale Leitstelle nach Empfang der Identifikationsnummer der GSM-SIM-Karte die vollständige Konfiguration des zu ersetzenden Endgeräts mit Hilfe eines Verfahrens nach Anspruch 2 auf das Ersatzendgerät schreibt.
